# EUROPEAN PATENT APPLICATION

(11) **EP 0 800 049 A2**
(43) Date of publication of application: **08.10.1997**
(21) Application number: 97630019.4
(22) Date of filing: 04.04.1997
(51) Int. Cl.: F28F 1/12

(54) **Indented fins for an automotive heat exchanger**

(30) Priority: 04.04.1996 US 627264
(71) Applicant: ZEXEL USA CORPORATION, Decatur, Illinois 62521 (US)
(72) Inventor: Harris, Matthew K., Lewisville, Texas 75067 (US); Snyder, Micheal L., Wylie, Texas 75098 (US)
(74) Representative: Weydert, Robert

(57) **Abstract**

The heat exchanger (11) of the type used for a condenser in a vehicle air conditioning system includes a pair of parallel, tubular headers (13, 15) which are spaced apart with a plurality of refrigerant flow tubes (21) extending between the headers (13, 15). The flow tubes (21) have upper and lower flat sides (35, 37) and forward and rearward outermost edges (25, 27). The forward and rearward outermost edges (25, 27) longitudinally extend the length of the flow tubes (21) to define forward and rearward outermost planes of the flow tubes (21), respectively. A plurality of serpentine fins (41) have alternately disposed ridges and furrows which define upper and lower crests (45, 47). Intermediate portions of the crests (45, 47) are indented to provide recesses (55), with tabs (57, 59) extending from opposite ends of the crests (45, 47). The tabs (57, 59) extend outward and adjacent to the forward and rearward outermost edges (25, 27) of the flow tubes (21), outward of the forward and rearward outermost planes, and retain the flow tubes (21) within the recesses (55) formed into the intermediate portions of the crests (45, 47). The headers (13, 15) and serpentine fins (41) are brazing clad for passing through a brazing furnace to braze the headers (13, 15) and serpentine fins (41) to the flow tubes (21). The tabs (57, 59) of the fins (41) braze to the outermost edges of the flow tubes (21), and the intermediate portions of the crests (45, 47) of the fins (41) braze to the upper and lower flat sides (35, 37) of the flow tubes (21).

## Description

### BACKGROUND OF THE INVENTION

### 1. Field of the Invention:

This invention relates in general to heat exchangers, and in particular to a condenser with indented fins having tabs for retaining the fins between refrigerant flow tubes.

### 2. Description of the Prior Art:

Heat exchangers, such as parallel flow condensers used in vehicle air conditioning systems, have been manufactured from aluminum components which assembled and then passed through a brazing furnace to braze the components together into a single unit. The components typically include header tanks, refrigerant flow tubes and fin stock. The header tanks and fin stock are brazing clad and will braze to the flow tubes when passed through a brazing furnace. The components are assembled so that the refrigerant flow tubes extend between the header tanks, parallel to one another. The fin stock is aligned to extend between the refrigerant flow tubes, with lengths of the fin stock extending parallel to the refrigerant flow tubes. The assembled components are mounted to a brazing fixture to hold the components in proper alignment as they are passed through the brazing furnace.

Prior art brazing fixtures have metal bars and metal bands for holding the fin stock in alignment with the refrigerant flow tubes. The fin stock is formed from corrugated strips of brazing clad aluminum sheet metal which are flexible and require mechanical support to extend for any significant length between the refrigerant flow tubes. The metal bars and bands of brazing fixtures are spaced apart along the length of the fin stock and refrigerant flow tubes, and will not always adequately support the fin stock. The fin stock can then become misaligned with and extend outward from the refrigerant flow tubes, resulting in a condition called "high fin." If the fin stock protrudes outward from the refrigerant flow tubes beyond acceptable tolerances, it results in an unacceptable defect which will require rework or scrapping of the heat exchangers.

### SUMMARY OF THE INVENTION

An apparatus and method provide a heat exchanger of the type used for a condenser in a vehicle air conditioning system. The heat exchanger includes a pair of parallel, tubular headers which are spaced apart with a plurality of refrigerant flow tubes extending between the headers. The flow tubes have upper and lower flat sides, and forward and rearward outermost edges. The forward and rearward outermost edges longitudinally extend the length of the flow tubes to define forward and rearward outermost planes of the flow tubes, respectively. A plurality of serpentine fins have alternately disposed ridges and furrows which define upper and lower crests. Intermediate portions of the crests are indented to provide recesses, with tabs extending from opposite ends of the crests. The tabs extend outward and adjacent to the forward and rearward outermost edges of the flow tubes, outward of the forward and rearward outermost planes, and retain the flow tubes within the recesses formed into the intermediate portions of the crests. The headers and serpentine fins are brazing clad for passing through a brazing furnace to braze the headers and serpentine fins to the flow tubes. The tabs of the fins braze to the outermost edges of the flow tubes, and the intermediate portions of the crests of the fins braze to the upper and lower flat sides of the flow tubes.

### BRIEF DESCRIPTIOH OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a side, elevational view of a heat exchanger of the type used for a condenser in an automotive air conditioning system;
Figure 2 is a partial section view the heat exchanger of Figure 1 taken along section lines II-II;
Figure 3 is a sectional view of the indented serpentine fins of the heat exchanger of Figure 2 taken along section line III-III, and depicts a refrigerant flow tube in phantom; and
Figure 4 is a partial perspective view of one of the indented serpentine fins of Figure 3 engaging a refrigerant flow tube, which is shown in phantom.

### DETAILED DESCRIPTION OF THE PREFERRED EMBODIMENT

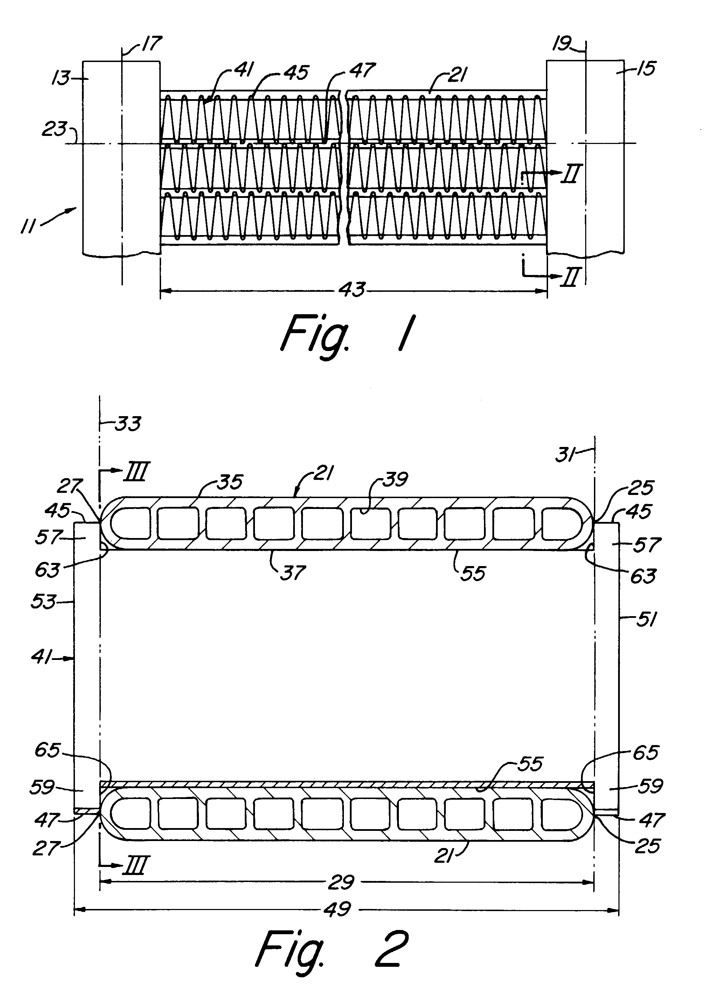

Figure 1 is a side, elevational view of heat exchanger 11 of the present invention, which is shown as a condenser for an vehicle air conditioning system. Heat exchanger 11 includes two brazing clad tubular headers 13, 15 having longitudinal axes 17, 19, respectively. A plurality of parallel refrigerant flow tubes 21 extend between tubular header 13, 15. Flow tubes 21 have longitudinal axes 23 which are perpendicular to the longitudinal axes 17, 19 of tubular headers 13, 15.

Figure 2 is a partial section view of heat exchanger 11, taken along section line II-II of Figure 1. Flow tubes 21 have forward outermost edges 25 and rearward outermost edges 27. Flow tubes 21 have a width 29 which extends between forward outermost plane 31 and rearward outermost plane 33. Forward outermost plane 31 is defined by the forward outermost edges 25 of flow tubes 21, and rearward outermost plane 33 is defined by rearward outermost edges 27 of flow tubes 21. Flow tubes 21 are extruded members made of aluminum. The extruded members providing flow tubes 21 do not extend outward of forward and rearward outermost planes 31, 33, such that flow tubes 21 have outermost edges 25, 27 and only extend between planes 31, 33.

Each of flow tubes 21 preferably have flat side surfaces 35, 37, with side 35 being an upper surface and side 37 being a lower surface. Each of surfaces 35, 37, forward outermost edge 25 and rearward outermost edge 27 together define an exterior flow tube profile for each of flow tubes 21. A plurality of flow passages 39 separately extend as separately defined flow passages through each of flow tubes 21, parallel to the longitudinal axes 23 (shown in Figure 1) of flow tubes 21.

Figures 1 and 2 show serpentine fins 41 of heat exchanger 11, alternately disposed with flow tubes 21. Fins 41 have length 43 which extends from the inner side of header 13 to the inner side of header 15. Serpentine fins 41 are formed from fin stock of brazing clad, corrugated, aluminum strips having ridges providing upper crests 45 and furrows providing lower crests 47. Each of serpentine fins 41 have widths 49 which extend between outward edges 51 and outward edges 53. Widths 49 are preferably the same and extend perpendicular to longitudinal axes 23 of flow tubes 21.

Indentations into intermediate portions of upper and lower crests 45, 47 of serpentine fins 41 provide recesses 55. Recesses 55 in crests 45, 47 define a pair of upper protuberances, or tabs, 57 on opposite sides of each of crests 47 and a pair of lower protuberances, or tabs, 59, on outward, opposite ends of each of crests 47. Tabs 57, 59 are on opposite sides of recesses 55. Tabs 57, 59 extend adjacent to and outward from forward and rearward outermost edges 25, 27 of flow tubes 21 to retain flow tubes 21 within recesses 55. Preferably, protuberances 57, 59 fit flush against outermost edges 25, 27 of flow tubes 21.

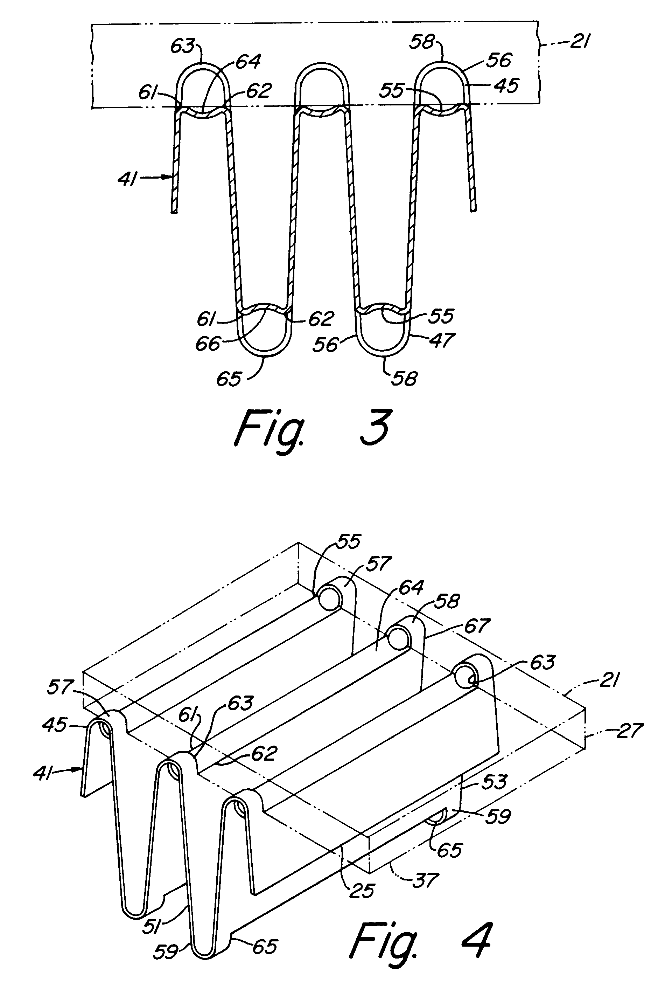

Figure 3 is a sectional view depicting serpentine fins 41 of heat exchanger 11, taken along section line III-III of Figure 2, with one of refrigerant flow tubes 21 shown in phantom. Outer periphery 56 defines tips 58 on the outer terminal ends of crests 45, 47 of serpentine fins 41. Recesses 55 define peripheral contact surfaces 61, 62 into an intermediate portion of crests 45, 47. When recesses 55 are formed into upper and lower crest 45, 47, the metal is bent downward from the upper crest 45 and upward from the lower crest 47, and the tips 58 of peripheries 56 of intermediate portions of crests 45, 47 flatten to define contact surfaces 64, 66. Contact surfaces 64, 66 preferably extend substantially parallel to one another.

Figure 4 depicts a perspective view of a portion of one of serpentine fins 41, with a portion of one of flow tubes 21 shown in phantom extending across upper crests 45. Recesses 55 cradle flow tubes 21 with tabs 57 extending on each side of the forward outermost edges 25 and the rearward outermost edges 27 of flow tubes 21. This holds fins 41 in position relative to the flow tubes 21 as they are passed through a brazing furnace.

Figures 3 and 4 depict inside edges 63, 65 of tabs 57, 59, respectively, defined by recesses 55. Inside edges 63, 65 are parallel to one another and outward edges 51, 53. Inside edges 63, 65 extend at right angles to contact surfaces 61, 62, and extend outward of outermost edges 25, 27 of flow tubes 21. Edges 63, 63 preferably fit flush against outermost edges 25, 27 of flow tubes 21. Inside edges 63, 65 and contact surfaces 61, 62, 64 and 66 of recesses 55 define an indented fin profile which mates flush with the exterior flow tube profiles of adjacent ones of flow tubes 21.

Serpentine fins 41 are brazing clad for passing through a brazing furnace to braze tabs 57, 59 to outermost edges 25, 27 of tubes 21, and to braze peripheral surfaces 61, 62 and contact surfaces 64, 66 to side surfaces 35, 37 of flow tubes 21. Fillets of brazing material form where serpentine fins 41 engage flow tubes 21. The brazing surface area provided by inside edges 63, 65 of tabs 57, 59, peripheral contact surfaces 61, 62 and contact surfaces 64, 66 is much larger than that provided by the terminal end tips 58 of peripheries 56, prior flattening. This increases the heat transfer surface area between refrigerant flow tubes 21 and sperpentine fins 41, increasing the thermal transfer efficiency of heat exchanger 11.

A method of providing a heat exchanger 11 according to the present invention is now described with reference to Figures 1 through 4. A first one of serpentine fins 41 is placed adjacent to an upper side surface 35 of a first one of flow tubes 21, with lower ones of recesses 55 of the first one of fins 21 cradling the upper side surface 35 of the first one of flow tubes 21. Then a second one of flow tubes 21 is placed in the upper ones of recesses 55 of the first one of serpentine fins 41, within the recesses 55 on the upper side of the first one of fins 41 cradling the lower side surfaces 37 of the second one of flow tubes 21, on an opposite side of the first one of fins 41 from the first of flow tubes 21.

A second one of serpentine fins 41 is then placed atop the second one of flow tubes 21, with the lower recesses 55 of the second fin 41 cradling the upper side 35 of the second one of flow tubes 41. The recesses 55 fit flush against and cradle the respective ones of sides 35, 37 of flow tubes 21. The tabs 57, 59 of crests 47 extend adjacent to and outward from the opposite forward outermost edges 25 and rearward outermost edges 27 of flow tubes 21, outside of forward outermost plane 31 and rearward outermost plane 33.

The above method steps are repeated to align the remainder of flow tubes 21 parallel to one another, with longitudinal axes 23 parallel and serpentine fins 41 alternately disposed with flow tubes 21. The lengths 49 of fins 41 extend parallel to longitudinal axes 23 of flow tubes 21, as shown in Figure 1. Then, tubular headers 13, 15 are fitted onto the opposite ends of flow tubes 21, with flow passages 39 of flow tubes 21 aligning with apertures through the sides of headers 13, 15. The assembly of components for heat exchanger 11 will then include tubular headers 13, 15, flow tubes 21 and fins 41. These are secured to a brazing fixture once they are aligned together as shown in Figure 1. The assembly is then passed through a brazing furnace to braze the components together into a single unit.

The present invention has several advantages over prior art heat exchangers. The recesses provided by indentations into the serpentine fins made according to the present invention cradle the refrigerant flow tubes, with tabs extending on the forward and rearward edges of the flow tubes to retain the serpentine fins in position with respect to the flow tubes. This prevents high fin as the flow tubes and serpentine fins are passed through a brazing furnace and brazed together. The recesses also provide larger contact surface areas than that which would be provided if only the very, terminal end tips of the crests of the fins were pressed against the upward and lower side surfaces of the flow tubes. Once brazed, the brazing material clad onto the fins will fill the gaps between the contact surfaces and the sides surfaces and outermost edges of the refrigerant flow tubes, with fillets of brazing material extending between the fins and the flow tubes to provide the larger thermal transfer surface area than that which would be provided if the fins were not indented.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments which fall within the true scope of the invention.

## Claims

1. A heat exchanger of the type for use in a vehicle air conditioner, the heat exchanger comprising in combination:
a pair of tubular headers which are spaced apart with the headers parallel to one another;
a plurality of spaced apart parallel flow tubes extending between the headers, each of the flow tubes having a longitudinal axis, forward and rearward outermost edges extending parallel to the longitudinal axis, and upper and lower surfaces extending between the outermost edges;
wherein the flow tubes are aligned with the forward ones of the outermost edges of the flow tubes defining a forward outermost plane and the rearward ones of the outermost edges of the flow tubes defining a rearward outermost plane;
a plurality of serpentine fins disposed between the flow tubes, the serpentine fins having alternately disposed ridges and furrows which define upper and lower crests, respectively, each of the crests extending along widths of the serpentine fins, transverse to the longitudinal axes of the flow tubes;
the widths of the serpentine fins being wider than the flow tubes and disposed such that the crests of the serpentine fins extend outward of the forward and rearward outermost planes defined by the outermost edges the flow tubes; and
a pair of tabs extending on opposite sides of each of the crests, outward of the forward and rearward outermost edges of the flow tubes, with the flow tubes located between the pairs of tabs to retain the fins in position with respect to the flow tubes.

2. The heat exchanger according to claim 1, wherein the crests have intermediate portions defined between the pairs of tabs, and the upper and lower surfaces of the flow tubes fit flush against the intermediate portions of the crests.

3. The heat exchanger according to claim 1, wherein the crests have intermediate portions defined between the pairs of tabs, and inward edges of the tabs fit flush against the forward and rearward edges of the flow tubes and retain the flow tubes against the intermediate portions of the crests.

4. The heat exchanger according to claim 1, wherein at least one of the fins and the flow tubes are brazing clad, and, after passing the headers, flow tubes and serpentine fins through a brazing furnace, the brazing clad wets both between the tabs and the outermost edges of the flow tubes, and between intermediate portions of the crests and the upper and lower surfaces of the flow tubes.

5. The heat exchanger according to claim 1, wherein each of the crests comprises:
a rounded profile defined on the opposite sides of each of the crests, the rounded profile having a tip;
an intermediate portion having a peripheral contact surface which extends between one of the pairs of the tabs, recessed from the rounded profile of the crests for receiving one of the upper and lower surfaces of an adjacent one of the flow tubes; and
the peripheral contact surface of the intermediate portion of each of the crests being larger than tip of the rounded profile of the opposite sides of the crests.

6. A heat exchanger of the type for use in a vehicle air conditioner, the heat exchanger comprising in combination:
a pair of tubular headers which are spaced apart with the headers parallel to one another;
a plurality of spaced apart parallel flow tubes extending between the headers, each of the flow tubes having a longitudinal axis, forward and rearward outermost edges extending parallel to the longitudinal axis, and upper and lower surfaces extending between the outermost edges;
wherein each of the flow tubes is formed by extrusion with a plurality of separately defined flow passages extending parallel to the longitudinal axes of the flow tubes for passing refrigerant between the headers;
wherein the flow tubes are aligned with the forward ones of the outermost edges of the flow tubes defining a forward outermost plane and the rearward ones of the outermost edges of the flow tubes defining a rearward outermost plane;
a plurality of serpentine fins disposed between the flow tubes, the serpentine fins having alternately disposed ridges and furrows which define upper and lower crests, respectively, each of the crests extending along widths of the serpentine fins, transverse to the longitudinal axes of the flow tubes;
wherein the widths of the serpentine fins are wider than the flow tubes and disposed such that outward edges of the serpentine fins extend outward of the forward and rearward outermost planes defined by the outermost edges the flow tubes;
recesses formed into intermediate portions of the crests, the recesses defining protuberances which extend on opposite sides of the crests; and
the protuberances disposed adjacent to and outward from the outermost edges of the flow tubes, outward of the forward and rearward outermost planes, and retaining the flow tubes within the recesses formed into the intermediate portions of the crests.

7. The heat exchanger according to claim 6, wherein the protuberances of the crests have innermost edges which fit flush against the outermost edges of the flow tubes.

8. The heat exchanger according to claim 6, wherein:
each of the crests define a rounded profile at the outermost ends of the crests, the rounded profile having a tip; and
the recesses formed into the crests define peripheral contact surfaces which fit flush against the uppermost and lowermost surfaces of adjacent ones of the flow tubes, and the peripheral contact surfaces are larger than tips of the rounded profile defined at the outermost ends of the crests.

9. The heat exchanger according to claim 6, wherein:
the protuberances of the crests have innermost edges which fit flush against the outermost edges of the flow tubes; and
the recesses formed into the crests define peripheral contact surfaces which fit flush against the uppermost and lowermost surfaces of adjacent ones of the flow tubes.

10. The heat exchanger according to claim 6, wherein at least one of the fins and the flow tubes are brazing clad, and the brazing clad wets both between the recesses in the serpentine fins and the uppermost and lowermost surfaces of the flow tubes, and between innermost edges of the protuberances and the outermost edges of the flow tubes.

11. A method for providing a heat exchanger of the type for use in a vehicle air conditioner, the method comprising the steps of:
providing a pair of tubular headers and a plurality of flow tubes, the flow tubes having longitudinal axes, forward and rearward outermost edges, and upper and lower surfaces which extend between the outermost edges of the flow tubes;
providing a plurality of serpentine fins which are wider than the flow tubes, the serpentine fins having alternating ridges and furrows which define crests, recesses formed into intermediate portions of the crests for receiving the flow tubes and protuberances defined on outer portions of the crests by the recesses;
alternately disposing the flow tubes and the serpentine fins, with the longitudinal axes of the flow tubes being parallel, the upper and lower surfaces of the flow tubes disposed in the recesses within the crests and the protuberances disposed outward of the outermost edges of the flow tubes;
placing the headers on opposite ends of the flow tubes, with the headers spaced apart and parallel to one another; and then,
passing the headers, flow tubes and serpentine fins through a brazing furnace to braze the headers, flow tubes and serpentine fins together into a single unit.

12. The method according to claim 11, wherein the step of providing the flow tubes comprises:
forming the flow tubes by extrusion, with a plurality of separately defined flow passages extending within each of the flow tubes, parallel to the longitudinal axes of the flow tubes.
